# EUROPEAN PATENT SPECIFICATION

(11) **EP 1 271 427 B1**
(45) Date of publication and mention of the grant of the patent: **17.08.2011**
(21) Application number: 02254285.6
(22) Date of filing: 20.06.2002
(51) Int. Cl.: G07F 7/08, G06F 1/00, G07F 7/10

(54) **Transaction terminal apparatus**
Transaktionsterminalvorrichtung
Dispositif de terminal de transactions

(30) Priority: 27.06.2001 JP 2001195270
(43) Date of publication of application: 02.01.2003
(73) Proprietor: FUJITSU LIMITED, Kawasaki-shi, Kanagawa 211-8588 (JP)
(72) Inventor: Kasasaku, Takami, c/o Fujitsu Limited, Kawasaki-shi, Kanagawa 211-8588 (JP)
(74) Representative: Gibbs, Christopher Stephen

(56) References cited:
- EP-A- 0 248 712
- EP-A- 0 379 333
- EP-A- 0 388 571
- US-A- 6 065 679

## Description

The present invention relates to a transaction terminal apparatus for executing transactions with customers, and more particularly to a transaction terminal apparatus which is tamperproof and/or has a function for preventing the leakage of secret information.

Transaction terminal apparatuses used in credit card and debit card settlement using bank cards are known.

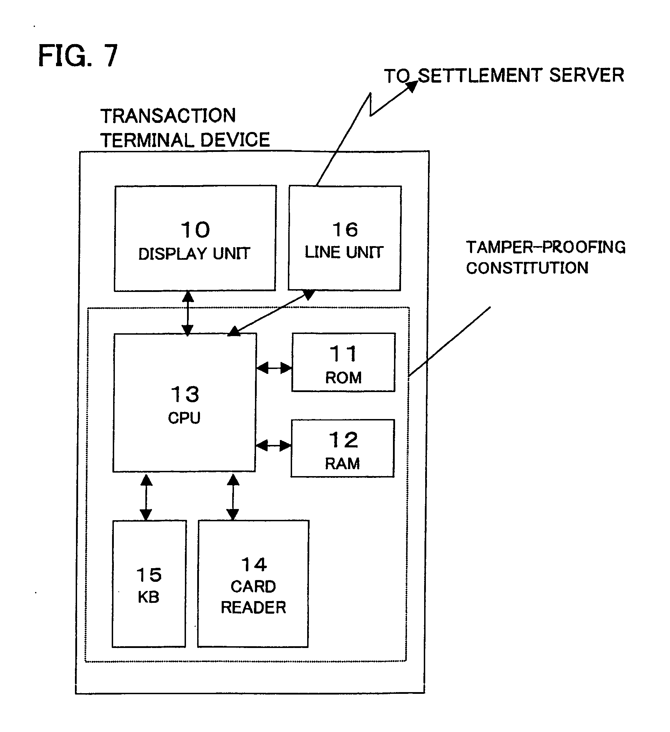

**Figure 7** is a simple block diagram of the constitution of a known transaction terminal apparatus having a monetary settlement function. In Figure 7, the transaction terminal apparatus (sometimes referred to as simply a "transaction terminal") is a portable terminal, for example, and comprises: a display unit 10, the display using, for example liquid crystal; ROM 11 for storing the settlement program, encryption program, and so forth; RAM 12 for storing temporary data; a CPU 13 for executing the settlement program; a card reader 14 for reading card information including the card number of a credit card or cash card; a keyboard 15 for the customer to input the personal identification number (PIN); and a line unit 16 for carrying out communication through a telecommunications network with a prescribed settlement server. The line unit 16 sends the personal identification number and card information encrypted by the encryption program stored in the ROM 11 to the settlement server. The settlement server is a host computer of a bank or credit card company, for example, and it decrypts the encrypted card number and personal identification number from the transaction terminal, verifies those, carries out a credit confirmation process or the like for determining the settlement authorization, and returns the prescribed response data to the transaction terminal. In the transaction terminal, the CPU 13 executes the settlement program and carries out the settlement process for that response data.

In this type of transaction terminal, it is necessary to prevent fraudulent access to personal information such as the personal identification number input from the keyboard 15 and the card information read from the card reader 14, and to secure the secrecy thereof. In other words, tamper-proofing is required so that the personal identification number and card information itself, and the encryption program and so forth for these cannot be stolen by some means. Tamper-proofing is the capacity to prevent the leakage of secret information from fraudulent access by opening the case of the transaction terminal. Tamper-proofing is realized, for example, by making it impossible to steal signals from the wiring by affixing the wiring with resin, or by adding a function for destroying the contents of the ROM 11 and RAM 12 therein when it is detected by prescribed detecting means that the case of the terminal is opened.

For this reason, in the prior art, it was necessary to provide the entire transaction terminal with a tamperproof structure, and to develop the transaction terminal having a settlement function as a dedicated device; however, this increases the cost of such devices.

The transaction terminal may have other functions in addition to the settlement function in order to improve its versatility. When a bar code reader is installed in the transaction terminal, the other functions may include a product bar code reading function, a price look up (PLU) function for functioning as a POS (point of sales) terminal, and a product ordering function.

When the transaction terminal has a plurality of functions including a settlement function in this way, a plurality of application programs for realizing those functions are stored in the ROM 11. Each application program is executed by the CPU 13.

However, when the entire transaction terminal is constituted so as to be tamperproof, it is not possible to add supplementary functions to the transaction terminal, or to add to or modify the application programs in order to update the application programs already included, because it is impossible to access those internal structures. For example, when the case of the transaction terminal is opened, the contents of the ROM 11 are deleted. In that case, it is necessary to replace all of the application programs in the ROM 11. Also, when the internal constitution elements such as the ROM 11 are covered with resin, it is necessary to replace all of those.

In this way, a known transaction terminal apparatus, for executing transactions (for example, monetary settlement transactions) including the processing of secret information such as a customer's personal information, is expensive and lacks versatility and expandability because the entire device has a tamperproof structure.

US 6065679 (Levie et al.) discloses a tamper-proof terminal having a modular construction. EP 248712 (Dassault) describes the use of resin to protect circuits against unauthorised access.

Embodiments of the present invention may provide a transaction terminal apparatus which has relatively low costs and good versatility and expandability, while ensuring security.

The present invention relates to a transaction terminal apparatus for executing transaction processing with a customer in which certain elements are required to be tamperproof. Some of the structural elements of the transaction terminal apparatus do not need to be tamperproof. The former elements are constituted as a module that is removable from the main body of the transaction terminal apparatus and the module is constituted so as to be tamperproof. In this way, the main body of the transaction terminal apparatus does not need to be made tamperproof because the elements required to be tamperproof are modular and can be removed from the main body. The application programs relating to various types of transactions stored in the main body can be easily added to, modified, revised, and updated, and the versatility and expandability are improved.

The present invention provides a portable transaction terminal apparatus as defined in claim 1.

For a better understanding of the invention, embodiments of it will now be described by way of example with reference to the following drawings, in which:
Figure 1 is a block diagram of a transaction terminal apparatus relating to an embodiment of the present invention;
Figure 2 is a flowchart of an example of the settlement processing using a transaction terminal embodying the present invention;
Figure 3 is an exterior perspective view of a concrete example of a transaction terminal apparatus embodying the present invention;
Figures 4A and 4B are drawings showing the exterior of the module 2 shown in Figure 3;
Figure 5 is a drawing showing another example of the constitution of the module 2;
Figure 6 is an exterior perspective view of another embodiment of the present invention; and
Figure 7 is a simple block diagram of a known transaction terminal apparatus having a settlement function.

The embodiments of the present invention are explained below. However, the technical scope of the present invention is not limited by these embodiments.

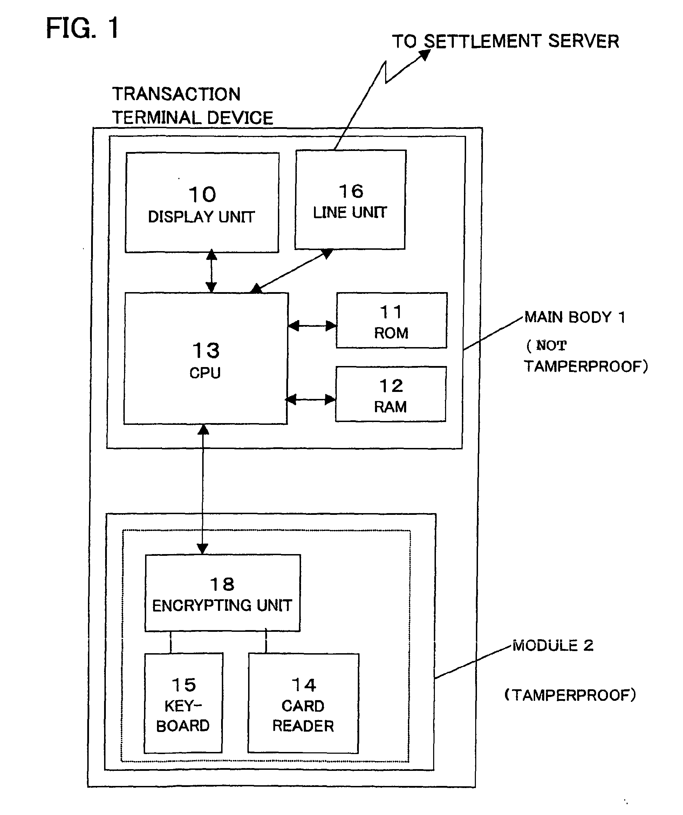

**Figure 1** is a block diagram of the constitution of a transaction terminal apparatus relating to an embodiment of the present invention. The transaction terminal apparatus relating to the present invention is illustrated as a portable terminal. Of those constitutional elements within the transaction terminal, only those elements for which tamper-proofing is required are made in modular form and made removable from the main body of the transaction terminal, in which there are other elements for which tamper-proofing is not required.

In Figure 1, the transaction terminal comprises a main body 1 and a module 2 mounted removably in it or on it. As shown in the drawing, the module 2 comprises a card reader 14 for reading information stored in the transaction medium, such as a credit card or cash card (for example, personal information such as the card number; hereinafter referred to sometimes as "card information"); a keyboard (KB) for the customer to input the personal identification number (PIN); and an encrypting unit 18 for encrypting the card information read and personal identification number input. Furthermore, the module 2 including these is constituted so as to be tamperproof.

The encrypting unit 18 may also comprise ROM for storing the encryption program, a CPU for executing the program, and RAM for storing temporary data, or it may be constituted as an encryption circuit comprising a logic circuit.

To make the constitution of the module 2 tamperproof, the wiring from the card reader 14 and the keyboard 15 loaded on the module 2, and the encrypting unit 18, are affixed with resin, for example. Physical signal theft is thereby prevented and tamper-proofing is ensured. Also, when the encrypting unit 18 is constituted of a CPU, ROM and RAM, tamper-proofing is ensured by establishing means for destroying data in the ROM and RAM when it is detected by prescribed detecting means that the module 2 is opened.

Meanwhile, the main body 1 comprises a display unit 10, the display being for example a liquid crystal display, ROM 11 for storing the settlement program and other application programs, RAM 12 for storing temporary data, a CPU 13 for executing the settlement program and other application programs, and a line unit 16 for communicating with a prescribed settlement server through a telecommunications network. Because the encrypting unit 18 is established in the module 2, the encrypting program is not stored in the ROM 11 of the main body 1 and the CPU 13 of the main body 1 does not execute the process of encrypting the card information and personal identification number.

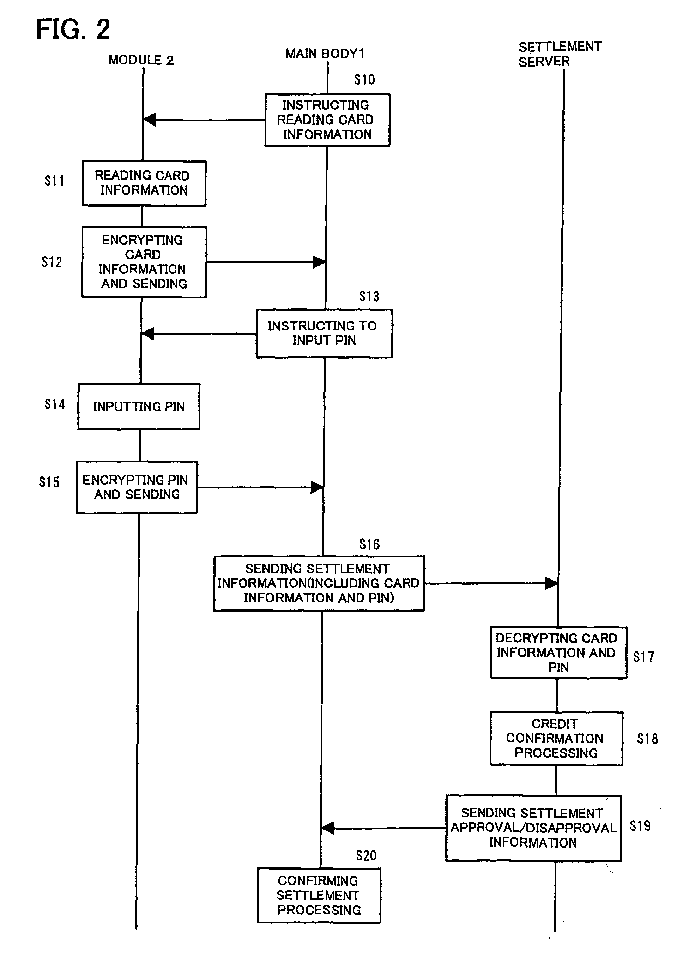

**Figure 2** is a flowchart of an example of the settlement processing using transaction terminals relating to the present invention. Moreover, in this example, the settlement amount (and preferably, the product name (or product number), or the like) is already registered in the CPU 13 of the main body 1 of the transaction terminal. When, for example, the transaction terminal includes a bar code scanner and has a POS (Point of Sales) function, information such as the name and cost of the product can be acquired by scanning the bar code of the item. Even if there is no bar code scanner, product information registered in the transaction terminal or product server (not shown) may also be acquired with a selection operation using the keyboard 15 through the POS function. Even without a POS function, product information such as the product number (for example the quantity or code) and the cost may also be directly input from the keyboard 15. In Figure 2, the CPU 13 of the main body 1 commands the reading of the card information when the settlement amount is decided (S10). The command, for example, is displayed on the display unit 10 of the main body 1. The card is then introduced into the card reader 14 which reads the card information (S11). In case of a credit card, the card information is personal information such as the card number. In the case of the cash card, the card information is personal information of the customer minimally including the account number.

Because the card information read is secret information, this information is encrypted by the encrypting unit 18 of the module and sent to the CPU 13 of the main body 1 (S12). The CPU 13 then commands the input of the personal identification number (S13). With this input command, the customer operates the keyboard 15 and inputs his or her personal identification number (S14).

Because the personal identification number input is secret information, this information is encrypted by the encrypting unit 18 of the module and sent to the CPU 13 of the main body 1 (S15).

Upon receiving the encrypted card information and personal identification number, the CPU 13 of the main body 1 sends those and the settlement amount (sometimes these are combined and called "settlement information") to the settlement server from the line unit 16 through the telecommunications network (S16).

Because the card information and personal identification number are processed in an encrypted state after being output from the module 2, the secrecy of the card information and personal identification number are maintained even if the main body is not tamperproof. On the telecommunications network also, because the information is in an encrypted state, secrecy is likewise maintained even if the information is stolen by another person. Moreover, the settlement server, which is the destination, is different for credit cards and cash cards.

Upon receiving the settlement information, the settlement server decrypts the card information and personal identification number therein (S17) and executes the card confirmation process (S18). The credit confirmation process minimally includes a process for verifying the personal identification number and a process for approving the settlement amount, and as a result determines whether the settlement is approved. On the basis of the results of the credit confirmation process, the settlement server sends the approval or disapproval information for the settlement to the transaction terminal (S19). At this time, the approval or disapproval information minimally includes the information that the settlement is approved or not approved, and does not include secret information such as the card information or personal identification number. The CPU 13 of the main body 1 of the transaction terminal carries out the confirmation of the settlement process according to the approval or disapproval information for the settlement (S20).

In this way, in the present environment, elements for acquiring secret information such as the card information and personal identification number, like the card reader 14 and the keyboard 15, and elements for decrypting the secret information, are made into a module, from among the elements constituting the transaction terminal. The entire transaction terminal can be made securely tamperproof by providing that module with a tamperproof constitution.

By modularising the elements for which tamper-proofing is necessary and separating those from the CPU, ROM, and RAM of the main body 1 of the transaction terminal, the main body 1 does not need to be made tamperproof and therefore it becomes possible to add too, modify, revise, and update simply those functions to be executed by the transaction terminal. The versatility and expandability of the transaction terminal is also improved. In other words, the main body 1 can be opened simply; the ROM 11 within the main body 1 can be simply accessed (or the contents stored in the ROM 11 are not destroyed if the main body 1 is opened); and the application programs stored in the ROM 11 can be easily added to, modified, revised, and updated.

Furthermore, for a transaction terminal that does not have a settlement function, meaning a transaction terminal for which tamper-proofing is not necessary, the main body 1 can still be used by preparing a general module which is not tamper-proof. Moreover, it is possible to switch between a module being tamper-proof and a module which is not tamper-proof according to the requirements of the settlement function.

Various modules are provided depending on the functions that can be executed by the transaction terminal. By using the modules according to the functions, the main body 1 can be used in common for various functions. Also, because the main body 1 can be used with different modules, this results in reduced costs for the transaction terminal.

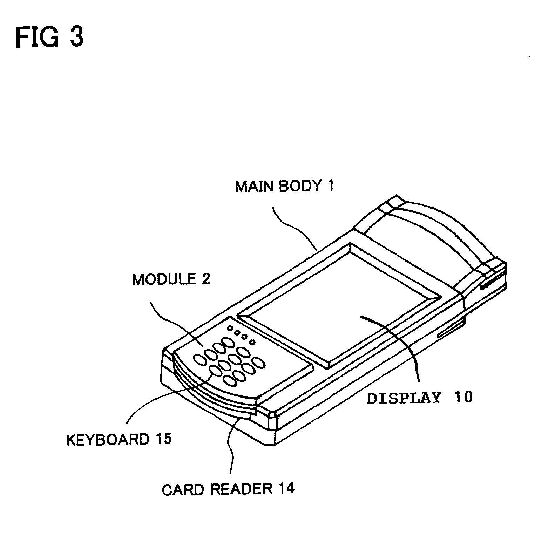

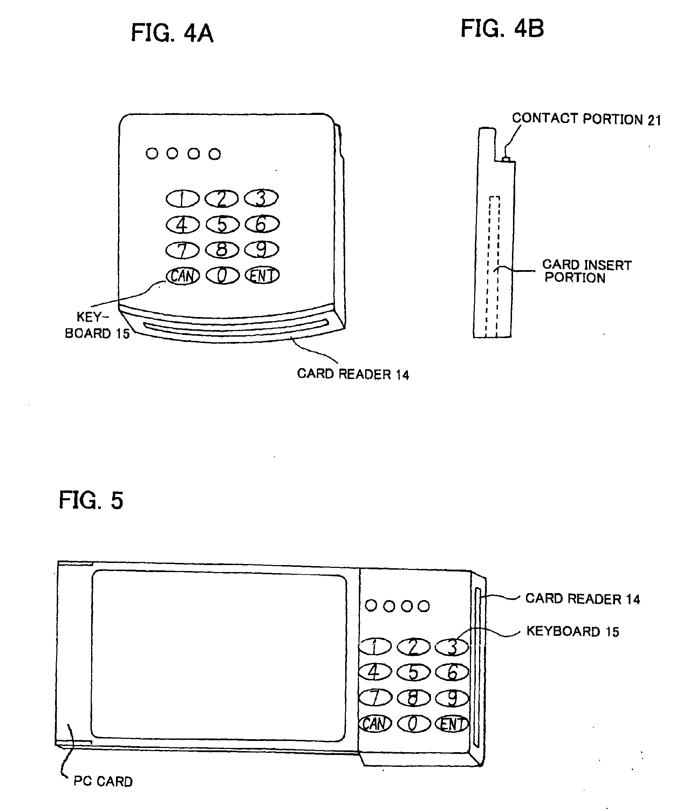

**Figure 3** is an external perspective view of the transaction terminal apparatus relating to an embodiment of the present invention. In Figure 3, a module including a card reader 14 and a keyboard 15 is mounted removably on the main body 1 which is provided with a display unit 10. **Figures 4A and 4B** are drawings showing a top view and a side view of the module 2 shown in Figure 3, respectively. As shown in Figure 4B, a contact portion (interface) 21 is established on the module 2. Causing this to connect with the contact portion (not shown) established on the main body 1 electrically connects the module 2 and main body 1. The interface between the main body 1 and the module 2 is not limited to an electrical contact and may have other forms. Through the contact portion (interface) of the module 2 and main body 1, information encrypted by the module 2 is sent to the main body 1. Also, a mounting mechanism (not shown) for removably attaching the module 2 to the main body 1 is established.

**Figure 5** is a drawing showing another example of the constitution of the module 2. The module 2 shown in Figure 5 has a PC card type of constitution. In this case, the main body 1 of the transaction terminal has a PC card slot and the main body 1 of the transaction terminal may also be a general-purpose computer device such as a notebook computer, for example.

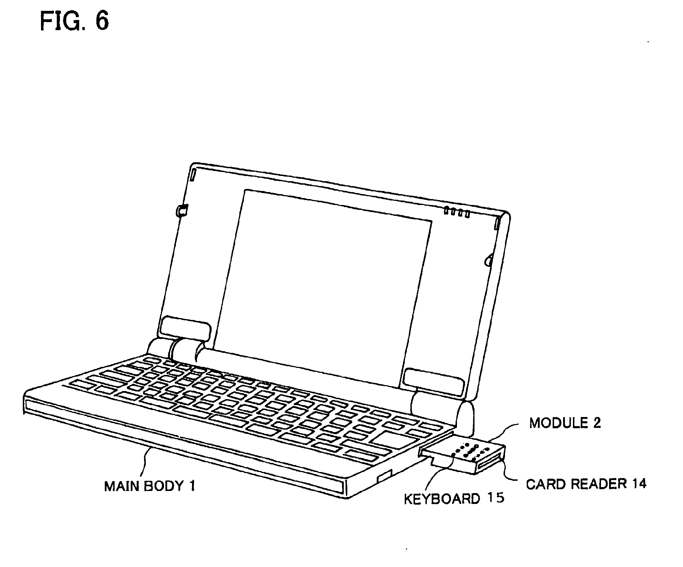

**Figure 6** is an external perspective view of a transaction terminal apparatus relating to the embodiment of Figure 5. The transaction terminal apparatus in Figure 6 has a constitution wherein the module 2 in Figure 5 is inserted in the main body 1 which is a notebook computer. Specifically, when the module 2 shown in Figure 5 is inserted in the PC card slot in the main body 1 of the transaction terminal, the module 2 is mounted on the main body 1 so that the card reader 14 and keyboard 15 protrude from the opening of the PC card slot.

In the embodiments of the present invention, a settlement process for handling card information and personal identification numbers was used as an example of the processing requiring tamper-proofing. However, processes requiring tamper-proofing are not limited to this and may also be, for example, a process for confirming an account balance at a financial institution using a cash card or a transaction process handling secret information. The present embodiment can be applied to all kinds of transaction terminal apparatus for executing transaction processing handling secret information.

Also, the transaction medium storing the customer's personal information is not limited to a credit card or cash card and may also be, for example, a transaction medium in a different form (for example, an IC memory that is not in the form of a card).

With embodiments of the present invention, those elements requiring tamper-proofing among the elements constituting a transaction terminal apparatus for executing a transaction process with a customer are constituted as a module which is removable from the main body of the transaction terminal apparatus and the module is constituted so as to be tamperproof. By modularising elements requiring tamper-proofing and separating them from the main body, it becomes unnecessary to tamperproof the main body of the transaction terminal apparatus. It therefore becomes easy to add to, modify, revise, and update the application programs relating to the various transactions stored in the main body making the apparatus more versatile and easier to upgrade.

For transaction terminals that do not require tamper-proofing, the main body of the transaction terminal apparatus can still be used and the costs of the transaction terminal apparatus can be lowered by providing modules depending on the type of transaction, such as by preparing a general purpose module that is not tamperproof.

## Claims

1. A portable transaction terminal apparatus for executing transaction processing relating to a customer, comprising:
a main body (1); and
a module (2) mounted removably on the main body (1) and constituted so as to be tamperproof;
wherein the module (2) comprises an acquiring unit (14, 15) for acquiring secret information relating to the customer necessary for the transaction processing, an encrypting unit (18) for encrypting the secret information, and an interface (21) via which the module can connect to the main body so that the encrypting unit (18) can send the encrypted data to the main body; and
the main body contains a control unit (13) for receiving the secret information encrypted by the said encrypting unit and executing the transaction processing using this secret information.

2. A transaction terminal apparatus according to claim 1, wherein the said secret information comprises personal information relating to the customer; and the said acquiring unit includes a reading unit (14) for reading the personal information from a transaction medium storing the said personal information.

3. A transaction terminal apparatus according to claim 1 or 2, wherein the said secret information comprises the personal identification number of the customer, and the acquiring unit includes an input unit (15) for inputting the personal identification number.

4. A transaction terminal apparatus according to any preceding claim, wherein the control unit (13) is adapted to carry out the following steps in order to perform the said transaction processing:
a first step of sending the secret information in an encrypted state to a prescribed server through a telecommunications network; and
a second step of receiving, from the said server and through the said telecommunications network, information on the results of a decrypting process for the said secret information and a prescribed credit confirmation process based on the decrypted secret information executed by the server.

5. A transaction terminal apparatus according to any preceding claim, wherein the tamper-proofing includes the feature that opening the module causes the deletion of data contained in the module.

6. A transaction terminal apparatus according to any preceding claim, wherein the tamper-proofing involves the wiring in the module being fixed in resin.

7. A transaction terminal apparatus according to any preceding claim, in which the main body (1) further includes a line unit (16) for communicating with a remote server.

8. A transaction terminal apparatus according to any preceding claim, including a display unit (10) located in the main body.

## Patentansprüche

1. Portable Transaktionsterminalvorrichtung zum Ausführen von Transaktionsprozessen betreffend einen Kunden, mit:
einem Hauptkörper (1); und
einem Modul (2), das abnehmbar an dem Hauptkörper (1) montiert und konstituiert ist, um manipuliersicher zu sein;
wobei das Modul (2) umfaßt eine Erfassungseinheit (14, 15) zum Erfassen von geheimer Information in Bezug auf den Kunden, die für die Transaktionsverarbeitung notwendig ist, eine Verschlüsselungseinheit (18) zum verschlüsseln der geheimen Information, und eine Schnittstelle (21), über welche das Modul mit dem Hauptkörper verbinden kann, so daß die verschlizsselungseinheit (18) verschlüsselte Daten an den Hauptkörper senden kann; und
der Hauptkörper enthält eine Steuereinheit (13) zum Empfangen der geheimen Information, die durch die Vezschltisselungseinheit verschlüsselt ist, und führt die Transaktionsverarbeitung unter verwendung dieser geheimen Information durch.

2. Transaktionsterminalvorrichtung nach Anspruch 1, bei der die geheime Information persönliche Information umfasst, die den Kunden betrifft, und die genannte Erfassungseinheit eine Leseeinheit (14) zum Lesen der persönlichen Information von einem Transaktionsmedium umfaßt, welches die persönliche Information speichert.

3. Transaktionsterminalvorrichtung nach Anspruch 1 oder 2, bei der die genannte geheime Information die persönliche Identifikationsnummer des Kunden umfaßt, und die Erfassungseinheit eine Eingabeeinheit (15) zum Eingeben der persönlichen Identifikationsnummer umfaßt.

4. Transaktionsterminalvorrichtung nach einem vorhergehenden Anspruch, bei der die Steuereinheit (13) adaptiert ist, um die folgenden Schritte der Reihe nach auszuführen, um die genannte Trangaktionaverarbeitung durchzuführen:
einen ersten Schritt des Sendens der geheimen Information in einem verschlüsselten Zustand durch ein Telekommunikationsnetz an einen vorgeschriebenen Server,
einen zweiten Schritt des Empfangens, von dem genannten Server durch das Telekommunnikationsnetz, von Information über die Ergebnisse des Entschlüsselungsprozesses für die geheime Information und einen vorbestimmten Kreditinformationsprozess basierend auf der entschlüsselten geheimen Information, ausgeführt durch den Server.

5. Transaktionstexminalvorrichtung nach einem vorhergehenden Anspruch, bei der die Manipuliersicherheitsprüfung das Merkmal enthält, daß das öffnen des Moduls die Zerstörung der in dem Modul enthaltenen Daten verursacht.

6. Transaktionsterminalvorrichtung nach einem vorhergehenden Anspruch, bei der die Manipuliersichierheitsprüfung involviert, daß die Verdrahtung in dem Modul in Harz fixiert wird.

7. Transaktionsterminalvorrichtung nach einem vorhergehenden Anspruch, bei der der Hauptkörper (1) ferner eine Leitungseinheit (16) zur Kommunikation mit dem entfernten Server umfaßt.

8. Transaktionsterminalvorrichtung nach einem vorhergehenden Anspruch, mit einer in dem Hauptkörper angeordneten Anzeigeeinheit (10).

## Revendications

1. Dispositif de terminal de transaction portable pour exécuter un traitement de transaction concernant un client, comprenant :
un corps principal (1) ; et
un module (2) monté de manière amovible sur le corps principal (1) et constitué de manière à être inviolable ;
dans lequel le module (2) comprend une unité d'acquisition (14, 15) pour acquérir des informations secrètes concernant le client nécessaires pour le traitement de transaction, une unité de chiffrement (18) pour chiffrer les informations secrètes, et une interface (21) par l'intermédiaire de laquelle le module peut se connecter au corps principal de sorte que l'unité de chiffrement (18) puisse envoyer les données chiffrées au corps principal ; et
le corps principal contient une unité de commande (13) pour recevoir les informations secrètes chiffrées par ladite unité de chiffrement et exécuter le traitement de transaction en utilisant ces informations secrètes.

2. Dispositif de terminal de transaction selon la revendication 1, dans lequel lesdites informations secrètes comprennent des informations personnelles concernant le client ; et ladite unité d'acquisition comprend une unité de lecture (14) pour lire les informations personnelles à partir d'un support de transaction mémorisant lesdites informations personnelles.

3. Dispositif de terminal de transaction selon la revendication 1 ou 2, dans lequel lesdites informations secrètes comprennent le numéro d'identification personnel du client, et l'unité d'acquisition comprend une unité d'entrée (15) pour entrer le numéro d'identification personnel.

4. Dispositif de terminal de transaction selon l'une quelconque des revendications précédentes, dans lequel l'unité de commande (13) est conçue pour effectuer les étapes suivantes afin d'effectuer ledit traitement de transaction :
une première étape d'envoi des informations secrètes dans un état chiffré à un serveur prescrit par l'intermédiaire d'un réseau de télécommunication ; et
une deuxième étape de réception, dudit serveur et par l'intermédiaire dudit réseau de télécommunication, d'informations concernant les résultats d'un processus de déchiffrement pour lesdites informations secrètes et d'un processus de confirmation de crédit prescrit basé sur les informations secrètes déchiffrées exécutés par le serveur.

5. Dispositif de terminal de transaction selon l'une quelconque des revendications précédentes, dans lequel l'inviolabilité comprend la caractéristique consistant en ce que l'ouverture du module provoque l'effacement des données contenues dans le module.

6. Dispositif de terminal de transaction selon l'une quelconque des revendications précédentes, dans lequel l'inviolabilité implique que le câblage dans le module est fixé dans une résine.

7. Dispositif de terminal de transaction selon l'une quelconque des revendications précédentes, dans lequel le corps principal (1) comprend en outre une unité de ligne (16) pour communiquer avec un serveur à distance.

8. Dispositif de terminal de transaction selon l'une quelconque des revendications précédentes, comprenant une unité d'affichage (10) située dans le corps principal.
